# EUROPEAN PATENT SPECIFICATION

(11) **EP 4 085 601 B1**
(45) Date of publication and mention of the grant of the patent: **04.11.2026**
(21) Application number: 21800150.1
(22) Date of filing: 30.04.2021
(51) Int. Cl.: G06F 11/30, G06F 11/34, H04L 9/40, G06F 21/55, G06F 21/73

(54) **SYSTEM AND METHOD FOR INFERRING DEVICE MODEL BASED ON MEDIA ACCESS CONTROL ADDRESS**
SYSTEM UND VERFAHREN ZUM ABLEITEN DES VORRICHTUNGSMODELLS ANHAND DER MEDIENZUGRIFFSKONTROLLADRESSE
SYSTÈME ET PROCÉDÉ D'INFÉRENCE D'UN MODÈLE DE DISPOSITIF EN FONCTION D'UNE ADRESSE DE COMMANDE D'ACCÈS AU SUPPORT

(30) Priority: 07.05.2020 US 202016868914
(43) Date of publication of application: 09.11.2022
(73) Proprietor: Armis Security Ltd., Tel Aviv-Yafo (IL)
(72) Inventor: SHOHAM, Ron, Tel Aviv-Yafo (IL); HANETZ, Tom, Tel Aviv-Yafo (IL); FRIEDLANDER, Yuval, Tel Aviv-Yafo (IL); BEN ZVI, Gil, Tel Aviv-Yafo (IL)
(74) Representative: Lohmanns Lohmanns & Partner mbB
(86) International application number: PCT/IB2021/053648
(87) International publication number: WO 2021/224744

(56) References cited:
- EP-A1- 3 154 242
- EP-A1- 3 154 242
- WO-A1-2019/064237
- WO-A1-2019/064237
- CN-A- 107 743 108
- CN-A- 109 246 685
- US-A1- 2016 253 069
- US-A1- 2018 048 534
- US-A1- 2019 132 286
- US-B1- 9 135 293
- MIETTINEN MARKUS ET AL: "IoT Sentinel Demo: Automated Device-Type Identification for Security Enforcement in IoT", PROCEEDINGS OF THE INTERNATIONAL CONFERENCE ON DISTRIBUTED COMPUTING SYSTEMS, IEEE COMPUTER SOCIETY, US, 5 June 2017 (2017-06-05), pages 2511 - 2514, XP033123186, ISSN: 1063-6927, [retrieved on 20170713], DOI: 10.1109/ICDCS.2017.284

## Description

This application claims the benefit of U.S. Non-Provisional Application No. 16/868,914 filed on May 07, 2020.

### TECHNICAL FIELD

The present disclosure relates generally to computing device profiling, and more specifically to inferring device attributes.

### BACKGROUND

Cybersecurity is the protection of information systems from theft or damage to the hardware, to the software, and to the information stored in them, as well as from disruption or misdirection of the services such systems provide. Cybersecurity is now a major concern for virtually any organization, from business enterprises to government institutions. Hackers and other attackers attempt to exploit any vulnerability in the infrastructure, hardware, or software of the organization to execute a cyber-attack. There are additional cybersecurity challenges due to high demand for employees or other users of network systems to bring their own devices, the dangers of which may not be easily recognizable.

To protect networked systems against malicious entities accessing the network, some existing solutions attempt to profile devices accessing the network. Such profiling may be helpful for detecting anomalous activity and for determining which cybersecurity mitigation actions are needed for activity of a given device. Providing accurate profiling is a critical challenge to ensuring that appropriate mitigation actions are taken.

The challenge involved with profiling a user device is magnified by the fact there is no industry standard for querying and/or obtaining information from user devices, user devices, and so on.

Media Access Control (MAC) addresses are unique identifiers assigned to Network Interface Controllers (NICs) for use as a network address in communications with a network segment. Hardware manufacturers sometimes assign sequential MAC addresses to similar devices.

WO2019/064237 A1 discloses techniques, systems, and methods for crowdsourcing device recognition to collect device information and identification data from a limited number of network devices and then leverage the collected information with machine learning techniques to expand the starting set in way that the prediction of device attributes like device type, device brand, family and model can be applied on billions of devices. EP3154242 A1 discloses an apparatus for determining specific information from a MAC address.

It would therefore be advantageous to provide a solution that would overcome the challenges noted above.

### SUMMARY

The invention is defined by the independent claims that accompany this disclosure. Any examples and embodiments of the description not falling within the scope of the claims do not form part of the invention as defined by the independent claims.

A summary of several example embodiments of the disclosure follows. This summary is provided for the convenience of the reader to provide a basic understanding of such embodiments and does not wholly define the breadth of the disclosure. This summary is not an extensive overview of all contemplated embodiments, and is intended to neither identify key or critical elements of all embodiments nor to delineate the scope of any or all aspects. Its sole purpose is to present some concepts of one or more embodiments in a simplified form as a prelude to the more detailed description that is presented later. For convenience, the term "some embodiments" or "certain embodiments" may be used herein to refer to a single embodiment or multiple embodiments of the disclosure.

Certain embodiments disclosed herein include a method for inferring device models. The method comprises: determining block statistics for each block of a plurality of blocks of a plurality of media access control (MAC) addresses, the plurality of blocks having a plurality of respective prefixes, wherein the plurality of blocks are grouped based on commonalities among the plurality of respective prefixes; generating an aggregated statistical model for the plurality of blocks based on the plurality of MAC addresses and the block statistics, wherein each block is a string of digits included in one of the plurality of MAC addresses; and applying the aggregated statistical model to the block statistics of at least one block of the plurality of blocks in order to determine at least one inferred device model, wherein each of the at least one block is grouped into the same group.

Certain embodiments disclosed herein also include a non-transitory computer readable medium having stored thereon causing a processing circuitry to execute a process, the process comprising: determining block statistics for each block of a plurality of blocks of a plurality of media access control (MAC) addresses, the plurality of blocks having a plurality of respective prefixes, wherein the plurality of blocks are grouped based on commonalities among the plurality of respective prefixes; generating an aggregated statistical model for the plurality of blocks based on the plurality of MAC addresses and the block statistics, wherein each block is a string of digits included in one of the plurality of MAC addresses; and applying the aggregated statistical model to the block statistics of at least one block of the plurality of blocks in order to determine at least one inferred device model, wherein each of the at least one block is grouped into the same group.

Certain embodiments disclosed herein also include a system for inferring device models. The system comprises: a processing circuitry; and a memory, the memory containing instructions that, when executed by the processing circuitry, configure the system to: determine block statistics for each block of a plurality of blocks of a plurality of media access control (MAC) addresses, the plurality of blocks having a plurality of respective prefixes, wherein the plurality of blocks are grouped based on commonalities among the plurality of respective prefixes; generate an aggregated statistical model for the plurality of blocks based on the plurality of MAC addresses and the block statistics, wherein each block is a string of digits included in one of the plurality of MAC addresses; and apply the aggregated statistical model to the block statistics of at least one block of the plurality of blocks in order to determine at least one inferred device model, wherein each of the at least one block is grouped into the same group.

### BRIEF DESCRIPTION OF THE DRAWINGS

The subject matter disclosed herein is particularly pointed out and distinctly claimed in the claims at the conclusion of the specification. The foregoing and other objects, features, and advantages of the disclosed embodiments will be apparent from the following detailed description taken in conjunction with the accompanying drawings.
Figure 1 is a network diagram utilized to describe various disclosed embodiments.
Figure 2 is a flowchart illustrating a method for inferring device models based on MAC addresses according to an embodiment.
Figure 3 is a flowchart illustrating a method for preprocessing MAC address data according to an embodiment.
Figure 4 is a schematic diagram of an inference generator according to an embodiment.

### DETAILED DESCRIPTION

It is important to note that the embodiments disclosed herein are only examples of the many advantageous uses of the innovative teachings herein. In general, statements made in the specification of the present application do not necessarily limit any of the various claimed embodiments. Moreover, some statements may apply to some inventive features but not to others. In general, unless otherwise indicated, singular elements may be in plural and vice versa with no loss of generality. In the drawings, like numerals refer to like parts through several views.

Data required for cybersecurity purposes may be explicitly included in incoming data streams. In particular, it has been identified that device model data, which is useful for predicting normal device activity, is often not included. This may occur, for example, when there is partial coverage of network data or partial coverage due to sampled traffic data.

In this regard, it has been identified that the aforementioned tendency of hardware manufacturers to use sequential MAC addresses for similar devices can be leveraged in order to predict device models. At the time of filing of this application, a valid MAC address is typically a representation of 12 hexadecimal digits, the first six of which are a common prefix assigned to a specific manufacturer referred to as an organizationally unique identifier (OUI). For example, if AA:AA:AA is the OUI assigned to manufacturer "X," then a block AA:AA:AA:BB:CC may include only devices having device model "Y." To this end, the disclosed embodiments provide techniques for determining device models implicitly using MAC addresses.

It has also been identified that privacy concerns typically require that device MAC addresses be kept secret from external entities. Accordingly, the disclosed embodiments further include techniques for utilizing an aggregated statistical model to infer device models based on MAC address data without requiring storage of the MAC addresses on-premises where the device model data will be utilized.

The various disclosed embodiments include a method and system for inferring device models based on MAC address data. MAC addresses from a data source are grouped based on their respective prefixes. Statistics are generated for each MAC address based on the its prefix blocks. The blocks include the 8 digit prefixes and 10 digit prefixes of each MAC address. Device model data is determined for each MAC address based on the statistics. The device model data may include data such as an inferred device model, a number of occurrences of the device model, a ratio of the number of occurrences of the device model relative to an entire population for the block, and the like. The inferred device model may be added to a profile for the device associated with the MAC address.

In an embodiment, a confidence level is generated based on the device model data for each MAC address. The confidence level indicates a likelihood that the inferred device model for the MAC address is accurate. In a further embodiment, only inferred device models having a confidence level above a threshold are used for profiling.

Additionally, to aid in inferring MAC addresses, the disclosed embodiments also include techniques for preprocessing raw data indicative of device models. Such embodiments increase the accuracy of the device model inferences which, in turn, allow for more accurate device profiling.

The disclosed embodiments allow for providing more complete datasets to be used for profiling devices and, therefore, provide more accurate device profiles. Consequently, device profiles including device model data inferred as described herein can be used to more accurately identify abnormalities or other behavior which may indicate malicious activity.

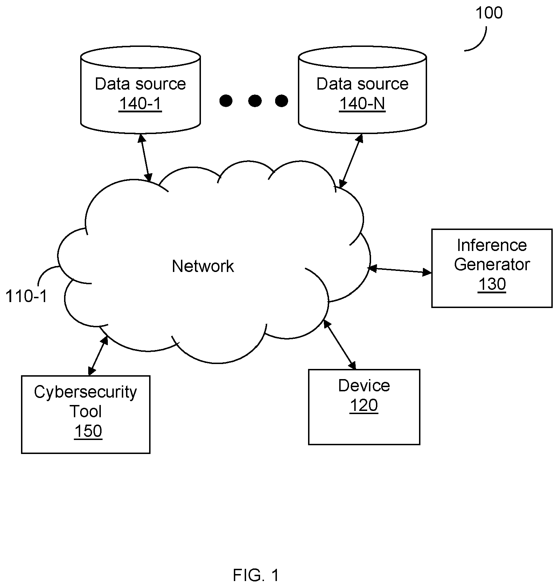

FIG. 1 shows an example network diagram 100 utilized to describe the various disclosed embodiments. In the example network diagram 100, one or more devices 120 (hereinafter referred to individually as a device 120 and collectively as devices 120, merely for simplicity purposes), an inference generator 130, and a plurality of data sources 140-1 through 140-N (hereinafter referred to individually as a data source 140 and collectively as data sources 140, merely for simplicity purposes) are communicatively connected via a network 110.

The network 110 may be, but is not limited to, a wireless, cellular or wired network, a local area network (LAN), a wide area network (WAN), a metro area network (MAN), the Internet, the worldwide web (WWW), similar networks, and any combination thereof.

Each device 120 is assigned a Media Access Control (MAC) address, for example by a manufacturer (not shown) of the device 120. The device 120 may be, but is not limited to, a network adaptor, network interface card, smartphone, or other network device having a network interface configured to connect to a network.

The inference generator 130 is configured to infer device models using MAC address data as described herein. To this end, the inference generator 130 may be configured to utilize MAC address data stored in the data sources 140. The MAC address data may include, but is not limited to, MAC addresses, model identifying data (e.g., device model names or other identifiers), device names, device behavioral data, combinations thereof, and the like.

The inference generator 130 is further configured to retrieve the MAC address data from the data sources 140. In an embodiment, based on the retrieved MAC address data, the inference generator 130 is configured to generate and apply a statistical model. Applying the statistical model anonymizes the data, thereby improving cybersecurity and allowing for compliance with privacy and other regulatory requirements.

In some embodiments, the inference generator 130 is configured to generate a device profile including the inferred device model or to add the inferred device model to a device profile. In a further embodiment, the inference generator 130 is configured to monitor activity of the device 120 in order to mitigate any potentially malicious behavior by the device 120, to mitigate any potential vulnerabilities of the device 120, or both. Such potentially malicious behavior or potential vulnerabilities may be detected based on the device profile and behavior of the device, device configuration, or both. Alternatively, the inference generator 130 may send the inferred device model or the device profile including the inferred device model to an optional cybersecurity tool 150.

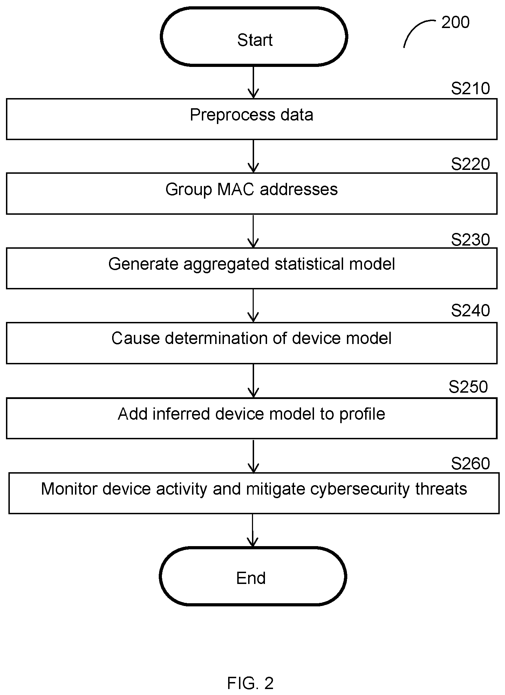

FIG. 2 is a flowchart 200 illustrating a method for inferring device models based on MAC addresses according to an embodiment.

At optional S210, MAC address data is preprocessed. The MAC address data may include, but is not limited to, MAC addresses, model identifying data (e.g., device model names or other identifiers), device names, device behavioral data, combinations thereof, and the like.

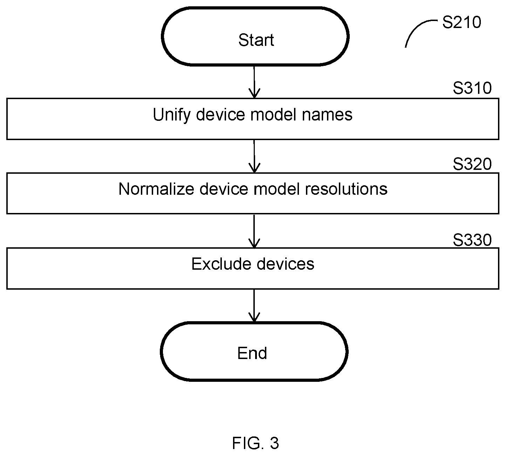

In an embodiment, S210 includes unifying device model names, normalizing device model resolutions, excluding data of one or more devices from further processing, a combination thereof, and the like. Various preprocessing steps are now discussed further with respect to FIG. 3.

FIG. 3 is a flowchart S210 illustrating a method for preprocessing MAC address data according to an embodiment.

At S310, device model names among the MAC address data are unified. The unified device model names follow the same naming convention such that synonymous device model names that are different but refer to the same device model are changed into the same format. In this regard, it is noted that device model names, particularly those from different data sources, may be formatted differently in a manner that may cause device models to be erroneously identified as different. Thus, unifying these device model names into the same format improves accuracy of device model inferences.

At S320, device model resolutions are normalized. The resolution of a device model is the degree of specificity. In this regard, it is noted that device model identifiers may be different levels of detail. This difference in detail may cause some device models to be erroneously identified as different. Thus, normalizing device model resolutions improves accuracy of device model inferences. As a non-limiting example, for a device that is model "Y" and produced by "Manufacturer X," device model identifiers for devices having the same model of device from different data sources may be "Model Y" and "Manufacturer X Device," respectively. These different resolutions therefore may be erroneously identified as different device models.

To resolve potential conflicts during device resolution normalization, S320 may further include applying an ontology. The ontology is designed to resolve and distinguish general device model identifiers from private identifiers.

At S330, some or all of the devices identified in the MAC address data may be excluded. In an embodiment, the exclusions are based on a library of blacklisted attributes. To this end, the excluded devices may include, but are not limited to, devices included in a blacklist, devices belonging to a category of blacklisted devices, devices made by blacklisted manufacturers, and the like.

In some implementations, S330 may further include retrieving the library of blacklisted attributes. The retrieval may occur periodically, each time the library would be used, and the like. Retrieving data indicating blacklisted attributes when those blacklists would be used allows for ensuring that rules are up-to-date with new devices or manufacturers.

In this regard, it has been identified that some devices may have attributes for which precise predictions cannot be made due to statistical insignificance and, therefore, could result in inaccurate device model inferences. As non-limiting examples, some manufacturers may assign MAC addresses sporadically, some device models or categories of device models may behave differently in different network settings, and some network hardware is designed for general purpose use which may behave differently than would be expected for comparable devices. These unusual attributes increase the likelihood that an incorrect device model is inferred. Thus, excluding device data based on one or more of the criteria noted above increases the accuracy of device model inferences.

It should be noted that the steps of FIG. 3 are depicted in a particular order for example purposes, but that the method of FIG. 3 is not limited to the depiction shown in FIG. 3. In some implementations, the steps may be performed in a different order, and some of the steps may not be performed.

Returning to FIG. 2, at S220, MAC addresses are grouped. In an embodiment, the groupings are based on prefixes of the MAC addresses. In a further embodiment, the divisions are based on respective blocks of the MAC addresses. In yet a further embodiment, the blocks used to determine the divisions are blocks including the 8 digit prefixes and 10 digit prefixes (hereinafter referred to as "8-block" and "10-block," respectively) of the MAC addresses. The 8-block includes the first 8 hexadecimal digits of the MAC address, while the 10-block includes the first 10 hexadecimal digits of the MAC address.

At S230, an aggregated statistical model is generated. In an embodiment, S230 includes determining weights to be used as part of the aggregated statistical model based on the MAC address data. In a further embodiment, S230 includes storing data for each block and generating logic for selecting the best model for incoming MAC addresses. The logic for model selection is based on sets of rules applied over neighboring MAC addresses and device-models that have been previously selected for those neighboring MAC addresses. The logic is a set of rules generated based on a validation set. As a non-limiting example, an inference can be determined using a rule which prioritizes the most frequent device model within a 10-block to the extent its aggregated count is greater than 10 with a ratio greater than 0.65. This ratio will be used as the prediction score for this device-model.

In an embodiment, S230 further includes determining statistics based on the MAC address data. Such block statistics include, but are not limited to, a number of occurrences of each block and a ratio of the number of the occurrences of the block relative to the entire population of blocks of the MAC addresses. In a further embodiment, the statistics are determined for each grouping of addresses grouped at S220.

At S240, the aggregated statistical model is applied to the MAC address data and the block statistics, thereby causing determination of an inferred device model for one or more of the MAC addresses. More specifically, for each MAC address, the logic generated based on the MAC address's statistics is applied to blocks having the same prefix in order to determine the inferred device model. In an embodiment, S240 includes determining inferred device models and a confidence level for each inferred device model. In an example implementation, the confidence level is a probability score between 0 and 1. In a further embodiment, only inferred device models having confidence levels above a threshold are used as the determined inferred device models.

At optional S250, each inferred device model is added to a respective device profile. The device profile to which inferred device model is added is a device profile of a networking device to which the respective MAC address is assigned.

At optional S260, device activity of one or more of the profiled devices may be monitored and potential cybersecurity threats identified via the monitoring may be mitigated. The monitoring and mitigation may include, but is not limited to, monitoring for abnormal or otherwise malicious behavior, detecting vulnerable devices, both, and the like.

In an example implementation, the device profile may be generated, potential vulnerabilities may be detected, or both, as described further in US Patent No. 10,511,620, assigned to the common assignee.

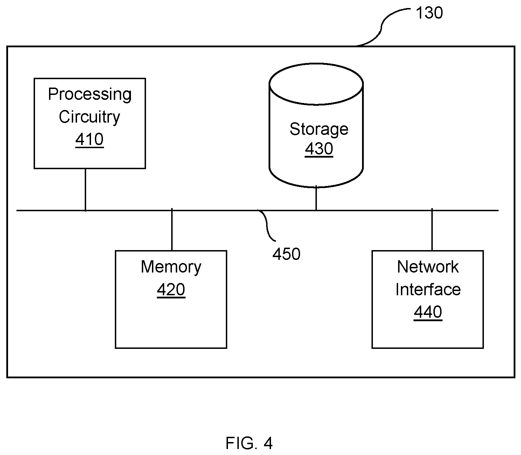

FIG. 4 is an example schematic diagram of an inference generator 130 according to an embodiment. The inference generator 130 includes a processing circuitry 410 coupled to a memory 420, a storage 430, and a network interface 440. In an embodiment, the components of the inference generator 130 may be communicatively connected via a bus 450.

The processing circuitry 410 may be realized as one or more hardware logic components and circuits. For example, and without limitation, illustrative types of hardware logic components that can be used include field programmable gate arrays (FPGAs), application-specific integrated circuits (ASICs), Application-specific standard products (ASSPs), system-on-a-chip systems (SOCs), graphics processing units (GPUs), tensor processing units (TPUs), general-purpose microprocessors, microcontrollers, digital signal processors (DSPs), and the like, or any other hardware logic components that can perform calculations or other manipulations of information.

The memory 420 may be volatile (e.g., random access memory, etc.), non-volatile (e.g., read only memory, flash memory, etc.), or a combination thereof.

In one configuration, software for implementing one or more embodiments disclosed herein may be stored in the storage 430. In another configuration, the memory 420 is configured to store such software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the processing circuitry 410, cause the processing circuitry 410 to perform the various processes described herein.

The storage 430 may be magnetic storage, optical storage, and the like, and may be realized, for example, as flash memory or other memory technology, compact disk- read only memory (CD-ROM), Digital Versatile Disks (DVDs), or any other medium which can be used to store the desired information.

The network interface 440 allows the inference generator 130 to communicate with the data sources 140 for the purpose of, for example, sending statistical models, and the like. Further, the network interface 440 allows the inference generator 130 to communicate with the cybersecurity tool 150 for the purpose of sending device profiles or portions thereof for use in cybersecurity activities.

It should be understood that the embodiments described herein are not limited to the specific architecture illustrated in FIG. 4, and other architectures may be equally used without departing from the scope of the disclosed embodiments.

It should also be noted that the various disclosed embodiments are described with respect to prefixes of MAC addresses, but that the disclosed embodiments may be generally applicable to any portion of MAC addresses storing the relevant data discussed herein regardless of whether those portions are prefixes. As a non-limiting example, if the same data were grouped based on OUls and stored based on decimal values, the disclosed embodiments could be applied based on the suffixes instead of the prefixes. The disclosed embodiments do not require that MAC address data be organized as assumed herein.

The various embodiments disclosed herein can be implemented as hardware, firmware, software, or any combination thereof. Moreover, the software is preferably implemented as an application program tangibly embodied on a program storage unit or computer readable medium consisting of parts, or of certain devices and/or a combination of devices. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such a computer or processor is explicitly shown. In addition, various other peripheral units may be connected to the computer platform such as an additional data storage unit and a printing unit. Furthermore, a non-transitory computer readable medium is any computer readable medium except for a transitory propagating signal.

It should be understood that any reference to an element herein using a designation such as "first," "second," and so forth does not generally limit the quantity or order of those elements. Rather, these designations are generally used herein as a convenient method of distinguishing between two or more elements or instances of an element. Thus, a reference to first and second elements does not mean that only two elements may be employed there or that the first element must precede the second element in some manner. Also, unless stated otherwise, a set of elements comprises one or more elements.

As used herein, the phrase "at least one of" followed by a listing of items means that any of the listed items can be utilized individually, or any combination of two or more of the listed items can be utilized. For example, if a system is described as including "at least one of A, B, and C," the system can include A alone; B alone; C alone; 2A; 2B; 2C; 3A; A and B in combination; B and C in combination; A and C in combination; A, B, and C in combination; 2A and C in combination; A, 3B, and 2C in combination; and the like.

## Claims

1. A method **,** performed by a processing circuitry, for inferring device models, comprising:
determining block statistics for each block of a plurality of blocks of a plurality of media access control (MAC) addresses, the plurality of blocks having a plurality of respective prefixes, wherein the plurality of blocks is grouped based on commonalities among the plurality of respective prefixes, wherein the block statistics include a ratio of a number of occurrences of each block to the total number of occurrences of the plurality of blocks;
generating an aggregated statistical model for the plurality of blocks based on the plurality of MAC addresses and the block statistics, wherein each block is a string of digits included in one of the plurality of MAC addresses; and
applying the aggregated statistical model to the block statistics of at least one block of the plurality of blocks in order to determine at least one inferred device model, wherein each of the at least one block is grouped into a same group.

2. The method of claim 1, further comprising:
adding a first inferred device model of the at least one inferred device model to a device profile; and
monitoring behavior of a networking device based on the device profile to detect abnormal behavior of the first networking device, wherein the abnormal behavior is a deviation from a predetermined normal behavior associated with the first inferred device model device model.

3. The method of claim 1, wherein the plurality of MAC addresses is included in networking model device data, further comprising:
preprocessing the networking device model data, wherein preprocessing the networking device model data further comprises unifying a plurality of device model names among the networking device model data based on an ontology, wherein the ontology defines synonymous device model names.

4. The method of claim 1, wherein the plurality of MAC addresses is included in networking model device data, further comprising:
preprocessing the networking device model data, wherein preprocessing the networking device model data further comprises normalizing a plurality of device model names among the networking device model data such that like device model names of the plurality of device model names have a same resolution.

5. The method of claim 1, wherein the plurality of MAC addresses is included in networking model device data, further comprising:
preprocessing the networking device model data, wherein preprocessing the networking device model data further comprises excluding at least one MAC addresses of the plurality of MAC addresses from subsequent processing based on at least one blacklist.

6. The method of claim 1, further comprising:
grouping the plurality of MAC addresses based on the plurality of blocks, wherein each block is a portion of a prefix of the respective MAC address, wherein the aggregated statistical model is generated based further on the grouping.

7. A non-transitory computer readable medium having stored thereon instructions for causing a processing circuitry to execute a process, the process comprising:
determining block statistics for each block of a plurality of blocks of a plurality of media access control (MAC) addresses, the plurality of blocks having a plurality of respective prefixes, wherein the plurality of blocks is grouped based on commonalities among the plurality of respective prefixes, wherein the block statistics include a ratio of a number of occurrences of each block to the total number of occurrences of the plurality of blocks;
generating an aggregated statistical model for the plurality of blocks based on the plurality of MAC addresses and the block statistics, wherein each block is a string of digits included in one of the plurality of MAC addresses; and
applying the aggregated statistical model to the block statistics of at least one block of the plurality of blocks in order to determine at least one inferred device model, wherein each of the at least one block is grouped into a same group.

8. A system for inferring device models, comprising:
a processing circuitry; and
a memory, the memory containing instructions that, when executed by the processing circuitry, configure the system to:
determine block statistics for each block of a plurality of blocks of a plurality of media access control (MAC) addresses, the plurality of blocks having a plurality of respective prefixes, wherein the plurality of blocks is grouped based on commonalities among the plurality of respective prefixes, wherein the block statistics include a ratio of a number of occurrences of each block to the total number of occurrences of the plurality of blocks;
generate an aggregated statistical model for the plurality of blocks based on the plurality of MAC addresses and the block statistics, wherein each block is a string of digits included in one of the plurality of MAC addresses; and
apply the aggregated statistical model to the block statistics of at least one block of the plurality of blocks in order to determine at least one inferred device model, wherein each of the at least one block is grouped into a same group.

9. The system of claim 8, wherein the system is further configured to:
add a first inferred device model of the at least one inferred device model to a device profile; and
monitor behavior of a networking device based on the device profile to detect abnormal behavior of the first networking device, wherein the abnormal behavior is a deviation from a predetermined normal behavior associated with the first inferred device model device model.

10. The system of claim 8, wherein the plurality of MAC addresses is included in networking model device data, wherein the system is further configured to:
preprocess the networking device model data, wherein preprocessing the networking device model data further comprises unifying a plurality of device model names among the networking device model data based on an ontology, wherein the ontology defines synonymous device model names.

11. The system of claim 8, wherein the plurality of MAC addresses is included in networking model device data, wherein the system is further configured to:
preprocess the networking device model data, wherein preprocessing the networking device model data further comprises normalizing a plurality of device model names among the networking device model data such that like device model names of the plurality of device model names have a same resolution.

12. The system of claim 8, wherein the plurality of MAC addresses is included in networking model device data, wherein the system is further configured to:
preprocess the networking device model data, wherein preprocessing the networking device model data further comprises excluding at least one MAC addresses of the plurality of MAC addresses from subsequent processing based on at least one blacklist.

13. The system of claim 8, wherein the system is further configured to:
group the plurality of MAC addresses based on the plurality of blocks, wherein each block is a portion of a prefix of the respective MAC address, wherein the aggregated statistical model is generated based further on the grouping.

## Patentansprüche

1. Verfahren, das von einer Verarbeitungsschaltung durchgeführt wird, zum Ableiten von Vorrichtungsmodellen, umfassend:
Bestimmen von Blockstatistiken für jeden Block einer Mehrzahl von Blöcken einer Mehrzahl von Medienzugriffskontroll(MAC)-Adressen, wobei die Mehrzahl von Blöcken eine Mehrzahl von jeweiligen Präfixen aufweist, wobei die Mehrzahl von Blöcken basierend auf Gemeinsamkeiten zwischen der Mehrzahl von jeweiligen Präfixen gruppiert wird, wobei die Blockstatistiken ein Verhältnis der Anzahl der Vorkommen jedes Blocks zur Gesamtzahl der Vorkommen der Mehrzahl von Blöcken beinhalten;
Erzeugen eines zusammenfassenden statistischen Modells für die Mehrzahl von Blöcken basierend auf der Mehrzahl von MAC-Adressen und den Blockstatistiken, wobei jeder Block eine Zeichenfolge ist, die in einer der Mehrzahl von MAC-Adressen beinhaltet ist; und
Anwenden des zusammenfassenden statistischen Modells auf die Blockstatistiken mindestens eines Blocks der Mehrzahl von Blöcken, um mindestens ein abgeleitetes Vorrichtungsmodell zu bestimmen, wobei jeder des mindestens einen Blocks in dieselbe Gruppe gruppiert wird.

2. Verfahren nach Anspruch 1, ferner umfassend:
Hinzufügen eines ersten abgeleiteten Vorrichtungsmodells des mindestens einen abgeleiteten Vorrichtungsmodells zu einem Vorrichtungsprofil; und
Überwachen des Verhaltens einer Netzwerkvorrichtung basierend auf dem Vorrichtungsprofil, um ein abnormales Verhalten der ersten Netzwerkvorrichtung zu erkennen, wobei das abnormale Verhalten eine Abweichung von einem vorbestimmten normalen Verhalten ist, das mit dem ersten abgeleiteten Vorrichtungsmodell verknüpft ist.

3. Verfahren nach Anspruch 1, wobei die Mehrzahl von MAC-Adressen in Netzwerkmodell-Vorrichtungsdaten beinhaltet ist, ferner umfassend:
Vorverarbeiten der Netzwerkvorrichtungsmodelldaten, wobei das Vorverarbeiten der Netzwerkvorrichtungsmodelldaten ferner ein Vereinheitlichen einer Mehrzahl von Vorrichtungsmodellnamen in den Netzwerkvorrichtungsmodelldaten basierend auf einer Ontologie umfasst, wobei die Ontologie synonyme Vorrichtungsmodellnamen definiert.

4. Verfahren nach Anspruch 1, wobei die Mehrzahl von MAC-Adressen in Netzwerkmodell-Vorrichtungsdaten beinhaltet ist, ferner umfassend:
Vorverarbeiten der Netzwerkvorrichtungsmodelldaten, wobei das Vorverarbeiten der Netzwerkvorrichtungsmodelldaten ferner ein Normalisieren einer Mehrzahl von Vorrichtungsmodellnamen in den Netzwerkvorrichtungsmodelldaten umfasst, derart, dass gleiche Vorrichtungsmodellnamen der Mehrzahl von Vorrichtungsmodellnamen dieselbe Auflösung aufweisen.

5. Verfahren nach Anspruch 1, wobei die Mehrzahl von MAC-Adressen in Netzwerkmodell-Vorrichtungsdaten beinhaltet ist, ferner umfassend:
Vorverarbeiten der Netzwerkvorrichtungsmodelldaten, wobei das Vorverarbeiten der Netzwerkvorrichtungsmodelldaten ferner ein Ausschließen mindestens einer MAC-Adresse der Mehrzahl von MAC-Adressen von der anschließenden Verarbeitung basierend auf mindestens einer schwarzen Liste umfasst.

6. Verfahren nach Anspruch 1, ferner umfassend:
Gruppieren der Mehrzahl von MAC-Adressen basierend auf der Mehrzahl von Blöcken, wobei jeder Block ein Abschnitt eines Präfixes der jeweiligen MAC-Adresse ist, wobei das zusammenfassende statistische Modell ferner basierend auf dem Gruppieren erzeugt wird.

7. Nichttransitorisches computerlesbares Medium, das darauf gespeicherte Anweisungen aufweist, um eine Verarbeitungsschaltung zu veranlassen, einen Vorgang auszuführen, wobei der Vorgang Folgendes umfasst:
Bestimmen von Blockstatistiken für jeden Block einer Mehrzahl von Blöcken einer Mehrzahl von Medienzugriffskontroll(MAC)-Adressen, wobei die Mehrzahl von Blöcken eine Mehrzahl von jeweiligen Präfixen aufweist, wobei die Mehrzahl von Blöcken basierend auf Gemeinsamkeiten zwischen der Mehrzahl von jeweiligen Präfixen gruppiert wird, wobei die Blockstatistiken ein Verhältnis der Anzahl der Vorkommen jedes Blocks zur Gesamtzahl der Vorkommen der Mehrzahl von Blöcken beinhalten;
Erzeugen eines zusammenfassenden statistischen Modells für die Mehrzahl von Blöcken basierend auf der Mehrzahl von MAC-Adressen und den Blockstatistiken, wobei jeder Block eine Zeichenfolge ist, die in einer der Mehrzahl von MAC-Adressen beinhaltet ist; und
Anwenden des zusammenfassenden statistischen Modells auf die Blockstatistiken mindestens eines Blocks der Mehrzahl von Blöcken, um mindestens ein abgeleitetes Vorrichtungsmodell zu bestimmen, wobei jeder des mindestens einen Blocks in dieselbe Gruppe gruppiert wird.

8. System zum Ableiten von Vorrichtungsmodellen, umfassend:
eine Verarbeitungsschaltung; und
einen Speicher, wobei der Speicher Anweisungen enthält, die bei Ausführung durch die Verarbeitungsschaltung das System konfigurieren zum:
Bestimmen von Blockstatistiken für jeden Block einer Mehrzahl von Blöcken einer Mehrzahl von Medienzugriffssteuerungs(MAC)-Adressen, wobei die Mehrzahl von Blöcken eine Mehrzahl von jeweiligen Präfixen aufweist, wobei die Mehrzahl von Blöcken basierend auf Gemeinsamkeiten zwischen der Mehrzahl von jeweiligen Präfixen gruppiert wird, wobei die Blockstatistiken ein Verhältnis der Anzahl der Vorkommen jedes Blocks zur Gesamtzahl der Vorkommen der Mehrzahl von Blöcken beinhalten;
Erzeugen eines zusammenfassenden statistischen Modells für die Mehrzahl von Blöcken basierend auf der Mehrzahl von MAC-Adressen und den Blockstatistiken, wobei jeder Block eine Zeichenfolge ist, die in einer der Mehrzahl von MAC-Adressen beinhaltet ist; und
Anwenden des zusammenfassenden statistischen Modells auf die Blockstatistiken mindestens eines Blocks der Mehrzahl von Blöcken, um mindestens ein abgeleitetes Vorrichtungsmodell zu bestimmen, wobei jeder des mindestens einen Blocks in dieselbe Gruppe gruppiert wird.

9. System nach Anspruch 8, wobei das System ferner konfiguriert ist zum:
Hinzufügen eines ersten abgeleiteten Vorrichtungsmodells des mindestens einen abgeleiteten Vorrichtungsmodells zu einem Vorrichtungsprofil; und
Überwachen des Verhaltens einer Netzwerkvorrichtung basierend auf dem Vorrichtungsprofil, um ein abnormales Verhalten der ersten Netzwerkvorrichtung zu erkennen, wobei das abnormale Verhalten eine Abweichung von einem vorbestimmten normalen Verhalten ist, das mit dem ersten abgeleiteten Vorrichtungsmodell verknüpft ist.

10. System nach Anspruch 8, wobei die Mehrzahl von MAC-Adressen in Netzwerkmodell-Vorrichtungsdaten beinhaltet ist, wobei das System ferner konfiguriert ist zum:
Vorverarbeiten der Netzwerkvorrichtungsmodelldaten, wobei das Vorverarbeiten der Netzwerkvorrichtungsmodelldaten ferner ein Vereinheitlichen einer Mehrzahl von Vorrichtungsmodellnamen in den Netzwerkvorrichtungsmodelldaten basierend auf einer Ontologie umfasst, wobei die Ontologie synonyme Vorrichtungsmodellnamen definiert.

11. System nach Anspruch 8, wobei die Mehrzahl von MAC-Adressen in Netzwerkmodell-Vorrichtungsdaten beinhaltet ist, wobei das System ferner konfiguriert ist zum:
Vorverarbeiten der Netzwerkvorrichtungsmodelldaten, wobei das Vorverarbeiten der Netzwerkvorrichtungsmodelldaten ferner ein Normalisieren einer Mehrzahl von Vorrichtungsmodellnamen in den Netzwerkvorrichtungsmodelldaten umfasst, derart, dass gleiche Vorrichtungsmodellnamen der Mehrzahl von Vorrichtungsmodellnamen dieselbe Auflösung aufweisen.

12. System nach Anspruch 8, wobei die Mehrzahl von MAC-Adressen in Netzwerkmodell-Vorrichtungsdaten beinhaltet ist, wobei das System ferner konfiguriert ist zum:
Vorverarbeiten der Netzwerkvorrichtungsmodelldaten, wobei das Vorverarbeiten der Netzwerkvorrichtungsmodelldaten ferner ein Ausschließen mindestens einer MAC-Adresse der Mehrzahl von MAC-Adressen von der anschließenden Verarbeitung basierend auf mindestens einer schwarzen Liste umfasst.

13. System nach Anspruch 8, wobei das System ferner konfiguriert ist zum:
Gruppieren der Mehrzahl von MAC-Adressen basierend auf der Mehrzahl von Blöcken, wobei jeder Block ein Abschnitt eines Präfixes der jeweiligen MAC-Adresse ist, wobei das zusammenfassende statistische Modell ferner basierend auf dem Gruppieren erzeugt wird.

## Revendications

1. Procédé, mis en œuvre par un circuit de traitement, d'inférence de modèles de dispositifs, comprenant :
la détermination de statistiques de blocs pour chaque bloc d'une pluralité de blocs d'une pluralité d'adresses de commande d'accès au support (MAC), la pluralité de blocs ayant une pluralité de préfixes respectifs, dans lequel la pluralité de blocs est regroupée en fonction des points communs entre la pluralité de préfixes respectifs, dans lequel les statistiques de blocs comportent un rapport entre le nombre d'occurrences de chaque bloc et le nombre total d'occurrences de la pluralité de blocs ;
la génération d'un modèle statistique agrégé pour la pluralité de blocs en fonction de la pluralité d'adresses MAC et des statistiques de blocs, dans lequel chaque bloc est une chaîne de chiffres incluse dans l'une de la pluralité d'adresses MAC ; et
l'application du modèle statistique agrégé aux statistiques de blocs d'au moins un bloc de la pluralité de blocs afin de déterminer au moins un modèle de dispositif inféré, dans lequel chacun de l'au moins un bloc est regroupé dans un même groupe.

2. Procédé selon la revendication 1, comprenant en outre :
l'ajout d'un premier modèle de dispositif inféré de l'au moins un modèle de dispositif inféré à un profil de dispositif ; et
la surveillance du comportement d'un dispositif réseau en fonction du profil de dispositif pour détecter un comportement anormal du premier dispositif réseau, dans lequel le comportement anormal est un écart par rapport à un comportement normal prédéterminé associé au premier modèle de dispositif inféré.

3. Procédé selon la revendication 1, dans lequel la pluralité d'adresses MAC est incluse dans des données de dispositif de modèle de réseau, comprenant en outre :
le prétraitement des données de modèle de dispositif réseau, dans lequel le prétraitement des données de modèle de dispositif réseau comprend en outre l'unification d'une pluralité de noms de modèles de dispositifs parmi les données de modèle de dispositif réseau en fonction d'une ontologie, dans lequel l'ontologie définit des noms de modèles de dispositifs synonymes.

4. Procédé selon la revendication 1, dans lequel la pluralité d'adresses MAC est incluse dans des données de dispositif de modèle de réseau, comprenant en outre :
le prétraitement des données de modèle de dispositif réseau, dans lequel le prétraitement des données de modèle de dispositif réseau comprend en outre la normalisation d'une pluralité de noms de modèles de dispositifs parmi les données de modèle de dispositif réseau de sorte que les noms de modèles de dispositifs similaires de la pluralité de noms de modèles de dispositifs ont une même résolution.

5. Procédé selon la revendication 1, dans lequel la pluralité d'adresses MAC est incluse dans des données de dispositif de modèle de réseau, comprenant en outre :
le prétraitement des données de modèle de dispositif réseau, dans lequel le prétraitement des données de modèle de dispositif réseau comprend en outre l'exclusion d'au moins une adresse MAC de la pluralité d'adresses MAC du traitement ultérieur en fonction d'au moins une liste noire.

6. Procédé selon la revendication 1, comprenant en outre :
le regroupement de la pluralité d'adresses MAC en fonction de la pluralité de blocs, dans lequel chaque bloc est une partie d'un préfixe de l'adresse MAC respective, dans lequel le modèle statistique agrégé est généré en fonction du regroupement.

7. Support non transitoire lisible par ordinateur sur lequel sont stockées des instructions destinées à amener un circuit de traitement à exécuter un processus, le processus comprenant :
la détermination de statistiques de blocs pour chaque bloc d'une pluralité de blocs d'une pluralité d'adresses de commande d'accès au support (MAC), la pluralité de blocs ayant une pluralité de préfixes respectifs, dans lequel la pluralité de blocs est regroupée en fonction des points communs entre la pluralité de préfixes respectifs, dans lequel les statistiques de blocs comportent un rapport entre le nombre d'occurrences de chaque bloc et le nombre total d'occurrences de la pluralité de blocs ;
la génération d'un modèle statistique agrégé pour la pluralité de blocs en fonction de la pluralité d'adresses MAC et des statistiques de blocs, dans lequel chaque bloc est une chaîne de chiffres incluse dans l'une de la pluralité d'adresses MAC ; et
l'application du modèle statistique agrégé aux statistiques de blocs d'au moins un bloc de la pluralité de blocs afin de déterminer au moins un modèle de dispositif inféré, dans lequel chacun de l'au moins un bloc est regroupé dans un même groupe.

8. Système d'inférence de modèles de dispositifs, comprenant :
un circuit de traitement ; et
une mémoire, la mémoire contenant des instructions qui, lorsqu'elles sont exécutées par le circuit de traitement, configurent le système pour :
déterminer des statistiques de blocs pour chaque bloc d'une pluralité de blocs d'une pluralité d'adresses de commande d'accès au support (MAC), la pluralité de blocs ayant une pluralité de préfixes respectifs, dans lequel la pluralité de blocs est regroupée en fonction des points communs entre la pluralité de préfixes respectifs, dans lequel les statistiques de blocs comportent un rapport entre le nombre d'occurrences de chaque bloc et le nombre total d'occurrences de la pluralité de blocs ;
générer un modèle statistique agrégé pour la pluralité de blocs en fonction de la pluralité d'adresses MAC et des statistiques de blocs, dans lequel chaque bloc est une chaîne de chiffres incluse dans l'une de la pluralité d'adresses MAC ; et
appliquer le modèle statistique agrégé aux statistiques de blocs d'au moins un bloc de la pluralité de blocs afin de déterminer au moins un modèle de dispositif inféré, dans lequel chacun de l'au moins un bloc est regroupé dans un même groupe.

9. Système selon la revendication 8, dans lequel le système est en outre configuré pour :
ajouter un premier modèle de dispositif inféré de l'au moins un modèle de dispositif inféré à un profil de dispositif ; et
surveiller le comportement d'un dispositif réseau en fonction du profil de dispositif pour détecter un comportement anormal du premier dispositif réseau, dans lequel le comportement anormal est un écart par rapport à un comportement normal prédéterminé associé au premier modèle de dispositif inféré.

10. Système selon la revendication 8, dans lequel la pluralité d'adresses MAC est incluse dans des données de dispositif de modèle de réseau, dans lequel le système est en outre configuré pour :
prétraiter les données de modèle de dispositif réseau, dans lequel le prétraitement des données de modèle de dispositif réseau comprend en outre l'unification d'une pluralité de noms de modèles de dispositifs parmi les données de modèle de dispositif réseau en fonction d'une ontologie, dans lequel l'ontologie définit des noms de modèles de dispositifs synonymes.

11. Système selon la revendication 8, dans lequel la pluralité d'adresses MAC est incluse dans des données de dispositif de modèle de réseau, dans lequel le système est en outre configuré pour :
prétraiter les données de modèle de dispositif réseau, dans lequel le prétraitement des données de modèle de dispositif réseau comprend en outre la normalisation d'une pluralité de noms de modèles de dispositifs parmi les données de modèle de dispositif réseau de sorte que les noms de modèles de dispositifs similaires de la pluralité de noms de modèles de dispositifs ont une même résolution.

12. Système selon la revendication 8, dans lequel la pluralité d'adresses MAC est incluse dans des données de dispositif de modèle de réseau, dans lequel le système est en outre configuré pour :
prétraiter les données de modèle de dispositif réseau, dans lequel le prétraitement des données de modèle de dispositif réseau comprend en outre l'exclusion d'au moins une adresse MAC de la pluralité d'adresses MAC du traitement ultérieur en fonction d'au moins une liste noire.

13. Système selon la revendication 8, dans lequel le système est en outre configuré pour :
regrouper la pluralité d'adresses MAC en fonction de la pluralité de blocs, dans lequel chaque bloc est une partie d'un préfixe de l'adresse MAC respective, dans lequel le modèle statistique agrégé est généré en fonction du regroupement.
